# EUROPÄISCHE PATENTSCHRIFT

(11) **EP 2 442 412 B1**
(45) Veröffentlichungstag und Bekanntmachung des Hinweises auf die Patenterteilung: **13.01.2021**
(21) Anmeldenummer: 11008184.1
(22) Anmeldetag: 10.10.2011
(51) Int. Cl.: H01S 3/139, H01S 3/13, H01S 3/08, H01S 3/081, H01S 3/083, H01S 3/16

(54) **Laseranordnung mit einer Phasenfrontregelung**
Laser assembly with phase front regulation
Dispositif Laser doté d'une stabilisation du front de phase

(30) Priorität: 14.10.2010 DE 102010048294
(43) Veröffentlichungstag der Anmeldung: 18.04.2012
(73) Patentinhaber: I.S.L. Institut Franco-Allemand de Recherches de Saint-Louis, 68301 Saint-Louis Cedex (FR)
(72) Erfinder: Eichhorn, Marc, D., 79736 Rickenbach (DE)

(56) Entgegenhaltungen:
- US-A1- 2010 097 602
- JIE LI ET AL: "A Novel Intra-Cavity Adaptive Optical System for High Power Solid-State Lasers", PHOTONICS AND OPTOELECTRONIC (SOPO), 2010 SYMPOSIUM ON, IEEE, PISCATAWAY, NJ, USA, 19. Juni 2010 (2010-06-19), Seiten 1-3, XP031704734, ISBN: 978-1-4244-4963-7
- ZHANG XIANG: "Investigation of output phase characteristic for a passively Q-switching high-power slab YAG laser", PROCEEDINGS OPTICAL DIAGNOSTICS OF LIVING CELLS II, Bd. 7749, 13. Juli 2010 (2010-07-13), Seite 774922, XP055436266, US ISSN: 0277-786X, DOI: 10.1117/12.870311 ISBN: 978-1-5106-1324-9

## Beschreibung

Die Erfindung betrifft eine Laseranordnung mit einer Phasenfrontregelung.

Ein Lasermedium, das für eine hohe Laserstrahlleistung ausgelegt ist, erzeugt thermische und thermomechanische Phasenfrontstörungen. Anders ausgedrückt, geht vom Lasermedium selbst eine Störgröße bezüglich der Phasenfront des Laserstrahls aus. Dies führt zu einer schlechten Strahlqualität. Fokussiert man einen derart erhaltenen Laserstrahl auf Distanz, treten hohe Verluste auf, da die notwendigen Intensitäten im Ziel nicht erreicht werden. Dieses Problem betrifft sowohl den militärischen Bereich der Laserwaffen als auch industrielle Anwendungen beim Schneiden und Schweißen. Zur Korrektur der vom Lasermedium verursachten Phasenfrontstörung benötigt man eine adaptive Optik.

Aus der US 2009/0028198 A1 ist eine Laserwaffe mit einer Phasenfrontregelung bekannt. Um ein Luftziel anzugreifen, muss ein Laserstrahl hoher Leistung die Erdatmosphäre durchdringen. Dabei verändern atmosphärische Turbulenzen die Phasenfront des Laserstrahls, wodurch sich die Strahlqualität und damit die Wirkung der Laserwaffe verschlechtert. Die Phasenfrontregelung regelt den bereits erzeugten Laserstrahl so, dass im Ziel eine vorbestimmte Phasenfront vorliegt. Ein Phasenfrontstellglied, ein deformierbarer Spiegel, ist dazu vorgesehen, die Phasenfront des Laserstrahls so zu verändern, dass die Störgröße der atmosphärischen Turbulenzen ausgeglichen wird. Die Phasenfrontregelung benutzt den Laserstrahl hoher Leistung selbst, der auf ein Luftziel gerichtet wird. Der reflektierte Laserstrahl wird mit einem Phasenfrontsensor ausgemessen. Die Sensorwerte werden von einem Phasenfrontregler ausgewertet, um Stellgliedsignale für den deformierbaren Spiegel zu erzeugen.

Die DE 699 19 929 T2 und die DE 10 2007 049 436 B4 betreffen weitere Laserwaffen mit einer Phasenfrontregelung zur Kompensierung atmosphärischer Störeinflüsse auf den Laserstrahl.

Die US 2006/0239312 A1 betrifft das Gebiet der optoelektronischen Nachrichtentechnik. Halbleiterlaser mit Phasenfrontregelungen finden hierbei Verwendung.

Die US 2010/10117009 A1 betrifft eine Laseranlage für die Halbleiter-Chip-Herstellung. Mit dieser Laseranlage werden extrem feine Strukturen erzeugt. Es wird ein gepulster Lichtstrahl hoher Leistung und geringer Wellenlänge des Extremen-Ultra-Violett(EUV)- Bereiches verwendet. Dazu wird ein EUV-Konversionsmaterial mit einem Arbeitslaserstrahl bestrahlt. Ausgehend von einem bereits erzeugten Laserstrahl wird der Arbeitslaserstrahl erhalten durch eine erste Verstärkung in einem Hauptoszillator und einer nachfolgenden Verstärkung in Nachverstärkern. Die Optiken, die hierbei auf dem Weg zum EUV-Konversionsmaterial durchlaufen werden, absorbieren einen Teil der Laserstrahlen und erhitzen sich stark. Hierbei verschlechtert sich die Strahllage und Krümmung der Phasenfront. Daher ist die Laseranlage mit einer Regelung versehen. Die Regelung verwendet einen Messlaserstrahl, der vor den Nachverstärkern eingekoppelt wird. Der Messlaserstrahl wird am werkstückseitigen Ende des Strahlenganges einem Phasenfrontsensor zugeführt, der an einen Phasenfrontregler angeschlossen ist, der dazu ausgebildet ist, Stellgliedsignale an das Stellglied zu leiten. Eine Verwendung hochauflösender Phasenfrontsensoren und Stellglieder mit deformierbaren Spiegeln wird beschrieben. Mit der Phasenfrontregelung des Messlaserstrahles erreicht man, dass nachfolgende Pulse des Arbeitslaserstrahls eine hohe Strahlgüte aufweisen. Eine einfache Regelung ist nicht möglich. Denn die zu korrigierenden Störungen werden durch die abbildenden Optiken mitverursacht, die im Strahlengangabschnitt zwischen Phasenfrontstellglied und Phasenfrontsensor angeordnet sind. Anders und allgemein ausgedrückt, liegt keine konstante Übertragungsfunktion zwischen Sensor und Stellglied vor.

Aus einem Fachaufsatz (Applied Physics B, Lasers and Optics, 2010, page 591-595, P. Yang et. al., "Fast and stable enhancement of the far-field peak power by use of an intracavity deformable mirror".) ist eine Laseranordnung mit einer Phasenfrontregelung bekannt. Ein Lasermedium ist innerhalb eines Resonators angeordnet. Der Resonator weist einen totalreflektierenden und einen teilreflektierenden Spiegel auf. Der totalreflektierende Spiegel ist gleichzeitig ein deformierbarer Spiegel, also ein Phasenfrontstellglied. Der teilreflektierende Spiegel ermöglicht die Auskoppelung des Laserstrahls. Hiervon wird ein Teilstrahl abgekoppelt und einem Phasenfrontsensor zugeführt. Seine Sensordaten werden einem Phasenfrontregler zugeführt. Im Fachaufsatz ist sehr ausführlich dargelegt, dass jede Veränderung des

Phasenfrontstellglieds die Lasermoden innerhalb des Resonators verändern. Damit verändert sich die Temperaturverteilung innerhalb des Lasermediums und damit auch seine optischen Eigenschaften. Ferner ist aufgeführt, dass es unmöglich sei, die Stellgliedsignale nur durch eine Messung der Phasenfront des aus dem Resonator ausgetretenen Laserstrahls zu bestimmen, da es kein genaues mathematisches Modell hierfür gibt. Um dennoch die Phasenfront regeln zu können, verwendet der Phasenfrontregler einen besonderen Algorithmus.

Eine ältere Anmeldung DE 10 2010 012 682.9 des diesseitigen Anmelders beschreibt für verschiedene Anwendungsgebiete eine Phasenfrontregelung mit einem neuronalen Netz.

Die DE-G 92 15 361.5 schlägt ebenfalls eine Phasenfrontregelung vor, um thermische und thermomechanische Phasenfrontstörungen eines Lasermediums einer Laseranordnung zu kompensieren. Das Lasermedium ist innerhalb eines Resonators angeordnet, der aus zwei Resonatorspiegeln besteht. Einer der Resonatorspiegeln ist gleichzeitig ein Phasenfrontstellglied. Zwischen dem Lasermedium und dem Phasenfrontstellglied ist ein Strahlteiler angeordnet. Er koppelt einen Teilstrahl des vom Lasermedium kommenden Laserstrahls aus. Der Teilstrahl beaufschlagt dann einen Phasenfrontsensor. Mit dem Phasenfrontsensor erhält man Sensordaten, die an einen Phasenfrontregler übermittelt werden. Der Phasenfrontregler erzeugt Stellgliedsignale für das Phasenfrontstellglied. Die Korrektur der Phasenfront findet innerhalb des Laserresonators statt. Damit ist der Resonator stabil, trotz thermischer Effekte des Lasermediums. Einbrüche der Laserleistung werden vermieden. Eine Regelung der Laserstrahlung ist nur möglich, wenn eine Laserstrahlung erzeugt wird. Pausen können nicht zur Regelung der Phasenfront genutzt werden. Ebenso befindet sich das Lasermedium in einem Strahlengangabschnitt zwischen dem Phasenfrontstellglied und dem Phasenfrontsensor, so dass keine optisch konstanten Verhältnisse in diesem Strahlengangabschnitt vorliegen. Da somit keine konstante Übertragungsfunktion in diesem Strahlengangabschnitt vorliegt, ist die Regelung erschwert.

Die US 2010/097602 A1 und ein Aufsatz (JIE LI ET AL: "A Novel Intra-Cavity Adaptive Optical System for High Power Solid-State Lasers", PHOTONICS AND OPTOELECTRONIC (SOPO), 2010 SYMPOSIUM ON, IEEE, PISCATAWAY, NJ, USA, 19. Juni 2010, Seiten 1-3) zeigen jeweils eine gattungsgemäße Laseranordnung mit den Merkmalen des Oberbegriffs des Anspruches 1.

Der Erfindung liegt ausgehend von einer gattungsgemäßen Laseranordnung die Aufgabe zu Grunde, eine Laseranordnung mit einer Phasenfrontregelung so auszubilden, dass sich die Regelung vereinfacht.

Diese Aufgabe wird erfindungsgemäß durch die Merkmale des Anspruches 1 gelöst.

Die Vorteile der Erfindung sind:
a) Zwar erfolgt die Regelung mit Hilfe des Messlaserstrahls, jedoch korrigiert das Phasenfrontstellglied in gleicher Weise den Arbeitslaserstrahl.
b) Die Phasenfrontregelung benutzt einen Messlaserstrahl. Dies bedeutet, dass in Pausen, in denen keine Arbeitslaserstrahlen erzeugt werden, die Phasenfront mit Hilfe des Messlaserstrahls korrigiert werden kann. Hierdurch können auch Abkühleffekte im Lasermedium berücksichtigt werden, wenn dieses nicht im Betrieb ist.
c) Da für die Phasenfrontregelung ein Messlaserstrahl verwendet wird, kann ein kostengünstiger Phasenfrontsensor, wie einer auf CCD/CMOS-Basis, eingesetzt werden.
d) Ferner kann ein Messlaserstrahl genau auf den Ansprechbereich eines Phasenfrontsensors angepasst werden.
e) Ferner sorgt der Messlaserstrahl dafür, dass die Regelung unabhängig von der Leistung und Modenverteilung des Arbeitslaserstrahls arbeitet. Daher sind sowohl stabile als auch instabile Laserresonatoren verwendbar.
f) Der Messlaserstrahl beaufschlagt zuerst das Einkoppelelement, dann das Lasermedium, dann das Phasenfrontstellglied, dann das Auskoppelelement und dann den Phasenfrontsensor. Bedingt durch diese Reihenfolge der Anordnung der optischen Elemente wirken in dem Strahlengangabschnitt zwischen dem Phasenfrontstellglied und dem Phasenfrontsensor keine Störgrößen oder eine zeitverzögemde Totstrecke auf den Messlaserstrahl ein. Daher können Steliglieddaten in einer einfachen Weise Sensordaten zugeordnet werden. Konkreter ausgedrückt, kann schnell und einfach zum Beispiel in Form einer Datenbank eine Beziehung zwischen einem mehrdimensionalen Sensordatensatz des Phasenfrontsensors und einem mehrdimensionalen, korrigierenden Stellglieddatensatz hergestellt werden.
g) Ein Wechsel des Lasermediums benötigt keine neue Kalibrierung der Phasenfrontregelung.

Gemäß einer Ausgestaltung der Erfindung weist der Arbeitslaserstrahl eine Frequenz auf, die von einer Frequenz des Messlaserstrahls unterschiedlich ist. Ferner ist das Einkoppelelement und/oder das Auskoppelelement wellenselektiv ausgebildet. Mit dieser Maßnahme ist es möglich, den Messlaserstrahl unabhängig vom Arbeitslaserstrahl ein- und/oder auszukoppeln.

Gemäß einer Ausgestaltung der Erfindung weist der Resonator einen ersten, benachbart zum Lasermedium angeordneten Resonatorspiegel und einen zweiten, benachbart zum Phasenfrontsensor angeordneten Resonatorspiegel auf. Dies so, dass der erste Resonatorspiegel als Einkoppelelement und/oder das der zweite Resonatorspiegel als Auskoppelelement ausgebildet ist. Mit dieser Maßnahme erspart man sich ein zusätzliches Element, wie einen Strahlteiler, zum Ein- und/oder Auskoppeln des Messlaserstrahls, da der erste und/oder zweite Resonatorspiegel diese Zusatzfunktion übernimmt. Ebenso fallen die optischen Verluste gering aus.

Gemäß einer Ausgestaltung der Erfindung sind vom Phasenfrontsensor Sensordaten erhaltbar, die zusätzlich von einem Leistungsregler der Messlaservorrichtung verarbeitbar sind. Die Leistung des Messlaserstrahls kann so optimal auf den Phasenfrontsensor eingestellt werden. Dies ermöglicht es, den Phasenfrontsensor ohne eine Übersteuerung in seinem optimalen Arbeitsbereich zu betreiben.

Gemäß einer Ausgestaltung der Erfindung ist ein zweiter Phasenfrontsensor vorgesehen, der mit einem Teilstrahl des Arbeitslaserstrahls beaufschlagbar ist, derart, dass vom zweiten Phasenfrontsensor erhaltbare Sensordaten zusätzlich von dem Phasenfrontregler verarbeitbar sind. Diese Maßnahme erhöht die Genauigkeit des Phasenfrontreglers.

Gemäß einer Ausgestaltung der Erfindung stimmen der Messlaserstrahl und der Arbeitslaserstrahl nicht nur hinsichtlich einer Phasenfrontform, sondern auch hinsichtlich eines intensitätsprofils überein. Die Phasenfrontform kann vorzugsweise eben oder auch beispielsweise sphärisch sein. Da die Phasenfront die Regelgröße ist, müssen der
Messlaserstrahl und der Arbeitslaserstrahl eine übereinstimmende Phasenfrontform aufweisen. Das Intensitätsprofil kann zum Beispiel rechteckig oder gaußförmig sein. Das Intensitätsprofil ist auch auf einen bestimmten Strahldurchmesser bezogen. Der Messlaserstrahl und der Arbeitslaserstrahl stimmen auch hinsichtlich des Intensitätsprofils überein, da sich dadurch eine identische Ausbreitung beider Strahlen ergibt. Dies erlaubt eine gute Korrektur des Arbeitslaserstrahls.

Nachfolgend wird der Begriff "Teleskop" verwendet. Der Begriff "Teleskop" ist in dieser Anmeldung weit auszulegen. Der Begriff Teleskop soll dabei jegliches, aus einem oder mehreren optischen Elementen bestehendes optisches System mit Abbildungseigenschaften umfassen. Ein Teleskop kann zum Beispiel mit sphärischen oder asphärischen optischen Linsen, oder sphärischen oder nicht sphärischen Spiegeln bewerkstelligt sein. Der Einfallswinkel kann senkrecht oder nicht senkrecht sein.

Gemäß einer Ausgestaltung der Erfindung weisen das Phasenfrontstellglied eine Korrekturebene und das Lasermedium eine festgelegte Phasenstörungsebene auf. Ferner ist vor dem Phasenfrontstellglied ein Teleskop zur Strahlanpassung angeordnet, mit dem die Phasenstörungsebene auf die Korrekturebene optisch abbildbar ist. Bei den derzeitigen Phasenfrontstellgliedern ist die Arbeitsfläche größer als die Querschnittsfläche des Messlaserstrahls. Das Teleskop passt die Flächen durch eine Strahlaufweitung einander an. Die Korrekturebene ist auf die Messebene des Phasenfrontsensors optisch abbildbar, damit eine eindeutige, beugungsunabhängige Beziehung zwischen diesen Ebenen erzielt wird.

Gemäß einer Ausgestaltung der Erfindung weist der Phasenfrontsensor eine Messebene auf. Ferner ist vor dem Phasenfrontsensor ein Teleskop zur Strahlanpassung angeordnet, mit dem die Korrekturebene auf die Messebene optisch abbildbar ist. Bei den derzeitigen Phasenfrontsensoren ist die Arbeitsfläche größer als die Querschnittsfläche des Messlaserstrahls. Das Teleskop passt die Flächen durch eine Strahlaufweitung einander an. Die Korrekturebene ist auf die Messebene des Phasenfrontsensors optisch abbildbar, damit eine eindeutige, beugungsunabhängige Beziehung zwischen diesen Ebenen erzielt wird. Dies kommt einer optisch feststehenden Beziehung oder einer konstanten Übertragungsfunktion im
Strahlengangabschnitt zwischen dem Phasenfrontstellglied und Phasenfrontsensor zu Gute.

Gemäß einer Ausgestaltung der Erfindung ist im Resonator ein Strahltransformator angeordnet, mit dem in Richtung Auskoppelung des Arbeitslaserstrahls ein Gaußsches Intensitätsprofil und in Richtung Lasermedium und Phasenfrontstellglied ein Rechteck-Intensitätsprofil generierbar sind. Damit erreicht man im Lasermedium eine bessere Energieextraktion. Ohne abbildende Teleskope wäre es allerdings schwierig, die Beugungsverluste eines Rechteck-Intensitätsprofils möglichst gering zu halten. Damit erfüllen die Teleskope im Falle der Verwendung einer Strahlformungsoptik zwei Aufgaben. Sie optimieren erstens die Korrektur der Phasenstörungen und verringern zweitens die resonatorinternen Beugungsverluste.

Ausführungsbeispiele der Erfindung werden nachfolgend an Hand der Zeichnungen näher beschrieben. Dabei zeigen:
Fig. 1 a eine Laseranordnung mit einer Phasenfrontregelung, bei der das Phasenfrontstellglied schräg beaufschlagt wird,
Fig. 1b eine Abwandlung der Laseranordnung nach Fig. 1a, wobei zusätzlich im Resonator ein Strahltransformator angeordnet ist,
Fig. 1c eine Abwandlung der Laseranordnung nach Fig. 1a, wobei der Resonator als Ringresonator ausgebildet ist,
Fig. 2a eine Abwandlung der Laseranordnung nach Fig. 1a, wobei das Phasenfrontstellglied senkrecht beaufschlagt wird,
Fig. 2b eine Abwandlung der Laseranordnung nach Fig. 2a, wobei der Resonator als Ringresonator ausgebildet ist,
Fig. 2c eine Abwandlung der Laseranordnung nach Fig. 2a, wobei ein zweiter Phasenfrontsensor verwendet wird.

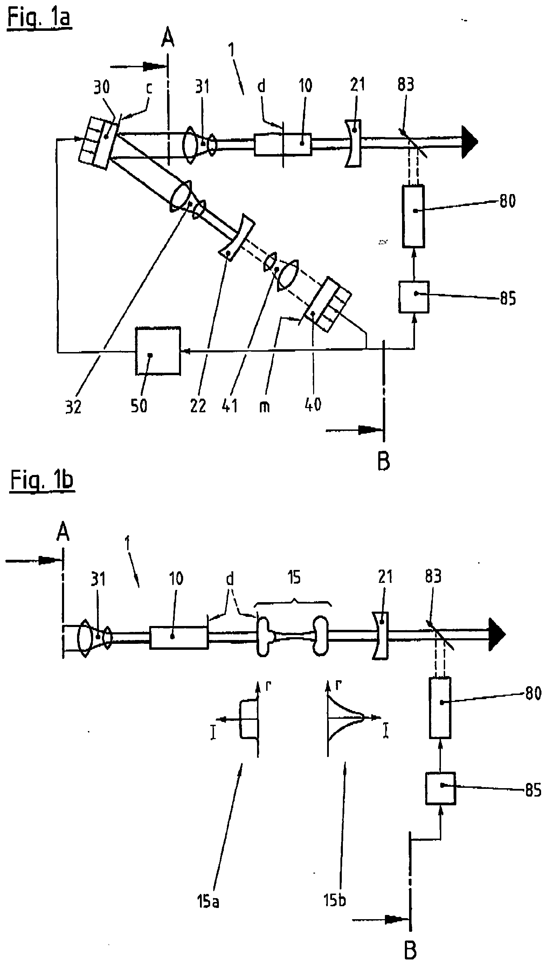

Die Fig. 1a zeigt eine Laseranordnung 1 mit einer Phasenfrontregelung. Die Laseranordnung 1 umfasst folgende Elemente:
- Einen Resonator mit einem Strahlengang, ein innerhalb des Resonators angeordnetes Lasermedium 10 zur Erzeugung eines Arbeitslaserstrahls und ein innerhalb des Resonators angeordnetes Phasenfrontstellglied 30. Der Resonator
   weist einen ersten, benachbart zum Lasermedium angeordneten Resonatorspiegel 21 und einen zweiten, benachbart zum Phasenfrontsensor 40 angeordneten Resonatorspiegel 22 auf. Der Arbeitslaserstrahl wird über den ersten Resonatorspiegel 21 ausgekoppelt. Bezogen auf den Arbeitslaserstrahl ist der Resonatorspiegel 21 teilreflektierend und teildurchlässig und der Resonatorspiegel 22 totalreflektierend. Das genannte Phasenfrontstellglied 30 ist ein deformierbarer Spiegel. Dieser kann ein Piezospiegel oder ein piezoelektrisch oder elektrostatisch verformbarer Membranspiegel sein.
- Ein Einkoppelelement, das so ausgebildet ist, dass ein Messlaserstrahl einer Messlaservorrichtung 80 in den Strahlengang des Resonators einkoppelbar ist. In der vorliegenden Ausführung ist der erste Resonatorspiegel 21 als Einkoppelelement ausgebildet. Der Resonatorspiegel 21 lässt den vom Strahlteiler 83 kommenden Messlaserstrahl hindurch. Um den Messiaserstrahl vom Arbeitslaserstrahl trennen zu können, ist die Frequenz des Arbeitslaserstrahls von der Frequenz des Messlaserstrahls unterschiedlich und das Einkoppelelement, also der erste Resonatorspiegel 21, ist wellenselektiv ausgebildet.
- Ein Auskoppelelement, das so ausgebildet ist, dass der Messlaserstrahl aus dem Resonator auskoppelbar ist. In der vorliegenden Ausführung ist der zweite Resonatorspiegel 22 als Auskoppelelement ausgebildet Der zweite Resonatorspiegel 22 ist ferner wellenselektiv ausgebildet So ausgebildet, reflektiert der Resonatorspiegel 22 den Arbeitslaserstrahl, lässt aber den Messlaserstrahl hindurch.
- Einen Phasenfrontregler 50 und einen Phasenfrontsensor 40. Der Phasenfrontregler 50 kann einen Computer mit einer Software umfassen. Der Phasenfrontregler 50 kann ebenso einen FPGA(Field Programmable Gate Array)-Schaltkreis umfassen, in dem ein Matrizenalgorithmus realisiert ist. Dieser berechnet aus den Daten des Phasenfrontsensors 40 direkt oder iterativ die notwendige Korrekturfunktion für das Phasenfrontstellglied 30. Der Phasenfrontregler 50 kann auch ein neuronales Netz aufweisen, das auf einem Chip basiert. Der Phasenfrontsensor 40 ist ein Sensor auf CCD/CMOS-Basis, welcher mit einem Mikrolinsenarray ausgestattet ist (Shack-Hartmann Sensor), oder ein Sensor auf CCD/CMOS-Basis mit einer Vierwellen-Lateral-Shearing-Interferometrieanordnung. Je nach Wellenlänge des Messlaserstrahls können auch andere zweidimensionale, bildgebende Sensoren verwendet werden.

Die Laseranordnung 1 ist wie folgt ausgebildet:
- Im Betrieb beaufschlagt der Messlaserstrahl zuerst das Einkoppelelement, also den ersten Resonatorspiegel 21, dann das Lasermedium 10, dann das Phasenfrontstellglied 30, dann das Auskoppelelement, also den zweiten Resonatorspiegel 22, und dann den Phasenfrontsensor 40.
- Die Störung der Phasenfront des Lasermediums 10 ist auf den Messlaserstrahl übertragbar. Anders ausgedrückt, nimmt der Messlaserstrahl die inneren Phasenstörungen des Lasermediums 10 auf.
- Vom Phasenfrontstellglied 30 ist die Störung des Messlaserstrahls und damit des Arbeitslaserstrahls korrigierbar.
- Vom Phasenfrontsensor 40 sind Sensordaten erhaltbar, die vom Phasenfrontregler 50 verarbeitbar sind.
- Von dem Phasenfrontregler 50 sind Stellgliedsignale für das Phasenfrontstellglied 30 erzeugbar.

Die Wellenlängen von Arbeits- und Messlaserstrahl sind nicht zu unterschiedlich, so dass das Phasenfrontstellglied 30 die Phasenstörungen im Lasermedium 10 sowohl für den Messlaserstrahl als auch für den Arbeitslaserstrahl kompensiert. Im Fall eines Lasermediums 10 aus einem Er:YAG-Kristall mit einer Emissionswellenlänge von 1645 nm verwendet man in der Messlaservorrichtung 80 einen Nd:YAG-Kristall mit einer Wellenlänge von 1064 nm. Oder, für eine noch bessere Korrektur, alternativ einen schmalbandigen Faserlaser mit 1555 nm in Zusammenarbeit mit einer schmalbandigen Wellenselektion bei 1555 nm im ersten Resonatorspiegel 21 und zweiten Resonatorspiegel 22, die gleichzeitig als wellenselektives Ein- bzw. Auskoppelelement für den Messlaserstrahl dienen. Denn zu große Unterschiede der Wellenlängen von Arbeits- und Messlaserstrahl hätten unterschiedliche Dispersionseffekte im Lasermedium 10 zur Folge. Die durch Temperaturunterschiede im Lasermedium 10 auftretenden Brechungsindexänderungen würden unterschiedlich starke Phasenstörungen in Mess- und Arbeitslaserstrahl verursachen.

Die vom Phasenfrontsensor 40 erhaltbaren Sensordaten sind zusätzlich von einem Leistungsregler 85 der Messlaservorrichtung 80 verarbeitbar, um auf einfache Art und Weise die Leistung des Messlaserstrahls an den Dynamikbereich des
Phasenfrontsensors 40 anpassen zu können. Eine Übersteuerung des Phasenfrontsensors 40 kann so vermieden werden. Wird als Phasenfrontsensor 40 ein Shack-Hartmann-Sensor verwendet, wird ein Punktmuster erhalten, wobei der Wert der Intensität der Punkte vom Leistungsregler 85 verarbeitet werden könnte.

Der Messlaserstrahl und der Arbeitslaserstrahl stimmen nicht nur hinsichtlich einer Phasenfrontform, sondern auch hinsichtlich eines Intensitätsprofils überein. So wird im Falle einer planen Phasenfrontform des Arbeitslaserstrahls mit einem Gaußschen Intensitätsprofil ein Messlaserstrahl mit ebenfalls einer planen Phasenfrontform und einem Gaußschen Intensitätsprofil in den Resonator eingekoppelt. Eine Regelung der Phasenfront dieses Messlaserstrahls auf eine plane Phasenfrontform am Phasenfrontsensor 40 ermöglicht somit eine Kompensation der Störungen im Lasermedium 10.

Das Phasenfrontstellglied 30 weist eine Korrekturebene c und das Lasermedium eine festgelegte Phasenstörungsebene d auf. Die Korrekturebene c ist die Spiegeloberfläche des deformierbaren Spiegels. Die festgelegte Phasenstörungsebene d liegt je nach Resonatoraufbau innerhalb des Lasermediums 10 oder auf einer Stirnfläche des Lasermediums 10. Wie im Rahmen der Fig. 1b noch beschrieben wird, kann im Falle der Verwendung eines Strahltransformators die Phasenstörungsebene d hypothetisch auf den Ausgang des Strahltransformators gelegt werden, welcher ein Rechteckprofil aufweist. Vor dem Phasenfrontstellglied 30 ist ein Teleskop 31 zur Strahlanpassung angeordnet, mit dem die Phasenstörungsebene d auf die Korrekturebene c optisch abbildbar ist.

Der Phasenfrontsensor 40 weist eine Messebene m auf. Die Messebene m ist die Sensorfläche des Phasenfrontsensors 40. Im Falle eines Shack-Hartmann-Sensors ist es die Ebene des Mikrolinsenarrays. Vor dem Phasenfrontsensor 40 ist ein Teleskop 41 zur Strahlanpassung angeordnet, mit dem die Korrekturebene c auf die Messebene m optisch abbildbar ist

Ein weiteres Teleskop 32 ist ausführungsbedingt notwendig. Seine Aufgabe besteht darin, den Strahldurchmesser auf den zweiten Resonatorspiegel 22 anzupassen und

die Korrekturebene c des Phasenfrontstellgliedes 30 auf die Spiegelebene des zweiten Resonatorspiegels 22 optisch abzubilden.

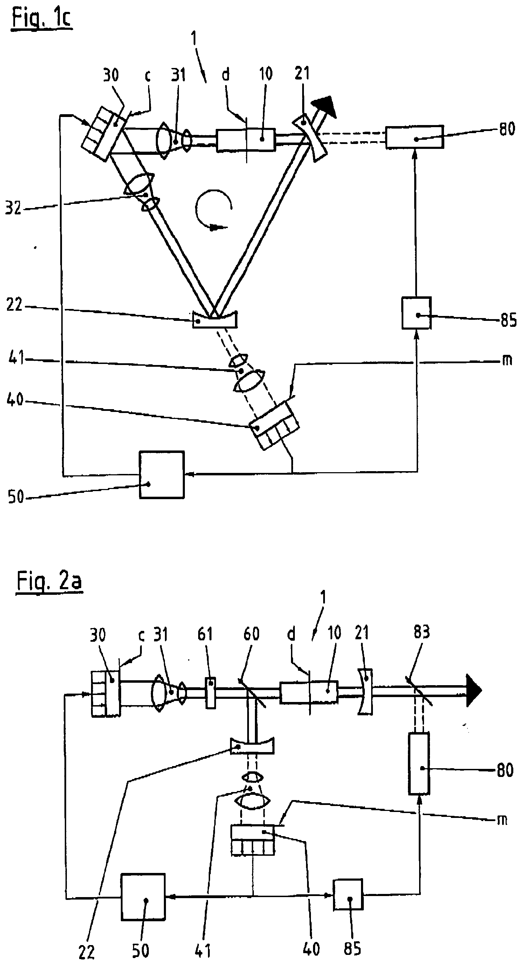

Die Teleskope 31, 32 und 41 (bezogen auf Ausführung nach Fig. 1 a) bestehen im einfachsten Fall aus zwei Linsen geeigneter Brennweite, so dass sie einen kollimierten, einfallenden Laserstrahl in einen kollimierten Ausgangslaserstrahl transformieren. Die Teleskope 31, 32 und 41 haben die Funktion, die Phasenstörungsebene d, die Korrekturebene c und die Messebene m ineinander abzubilden. Bei hohen Laserleistungen ist es vorteilhaft, an Stelle von Linsen gekrümmte Spiegel einzusetzen, welche unter einem Winkel beaufschlagt werden.

Alle Ausführungen haben gemeinsam, dass vor einem Wellenfrontstellglied 30 ein Teleskop 31 und vor einem Wellenfrontsensor 40 ein Teleskop 41 angeordnet sind. Alle Ausführungen haben ferner gemeinsam, dass diese Teleskope 31 und 41 zumindest dazu beitragen, die Phasenstörungsebene d, die Korrekturebene c und die Messebene m ineinander abzubilden.

In der Ausführung nach Fig. 1a liegt ein Zweifachdurchgang des Arbeitslaserstrahls vor. Der Zweifachdurchgang bedeutet, dass der Arbeitslaserstrahl zweimal die Störungen des Lasermediums 10 aufnimmt und zweimal das Phasenfrontstellglied 30 beaufschlagt und dabei korrigiert wird. Der erste Durchgang findet auf dem Hinweg zum Resonatorspiegel 22 und der zweite Durchgang erfolgt auf dem Rückweg vom Resonatorspiegel 22.

Nachdem die Fig. 1a ausführlich beschrieben wurde, werden nachfolgend die weiteren zeichnerisch dargestellten Ausführungen erläutert. Hierbei sind mit gleichen Bezugszeichen gleiche Teile benannt. Um Wiederholungen zu vermeiden, werden nur Unterschiede und Besonderheiten zu dem bereits Genannten erläutert.

Die Fig. 1b zeigt eine Abwandlung der Laseranordnung nach Fig. 1a bezüglich des Strahlengangabschnitts A-B. In Fig. 1b ist zusätzlich im Resonator ein Strahltransformator 15 angeordnet ist, mit dem in Richtung Auskoppelung des Arbeitslaserstrahls ein Gaußsches Intensitätsprofil und in Richtung Lasermedium 10 und Phasenfrontstellglied 30 ein Rechteck-Intensitätsprofil generierbar sind. Kleine
Diagramme 15a und 15b illustrieren dies, in denen über einem Radius r des Arbeits-oder Messlaserstrahls die Intensität l aufgetragen ist. Der Strahltransformator 15 erlaubt große Resonatorlängen und eine gleichmäßige Extraktion im Lasermedium 10. Bedingt durch den Strahltransformator 15 ist die Phasenstörungsebene d nicht in der Mitte des stabförmigen und zwei Stirnflächen aufweisenden Lasermediums 10 angeordnet. Vielmehr ist diejenige Stirnfläche als Phasenstörungsebene d festgelegt, die dem Strahltransformator 15 zugewandt ist. Alternativ kann die Phasenstörungsebene d direkt auf die dem Lasermedium 10 zugewandte Seite des Strahltransformators 15 gelegt werden. Illustriert ist dies durch eine gestrichelte Linie von d aus auf die entsprechende Seite des Strahltransformators 15. In beiden Fällen erreicht man, dass die Phasenfront bezüglich einer Phasenstörungsebene d korrigiert wird, die besonders für den Strahltransformator 15 geeignet ist, weil zwischen der Phasenstörungsebene d und dem Strahltransformator 15 keine Störgröße des Lasermediums 10 mehr auf den Arbeits- oder Messlaserstrahl einwirkt.

Die Fig. 1c zeigt eine Abwandlung der Laseranordnung 1 nach Fig, 1a. Die Abwandlung betrifft die Ausbildung des Resonators als Ringresonator. Aufgrund des Ringresonators ergibt sich ein Einfachdurchgang bezüglich des Arbeitslaserstrahls. Der Einfachdurchgang bedeutet, dass der Arbeitslaserstrahl nur einmal die Störungen des Lasermediums 10 aufnimmt und nur einmal das Phasenfrontstellglied 30 beaufschlagt und dabei korrigiert wird, bevor er über den teildurchlässigen Spiegel 21 ausgekoppelt wird. Ein Strahlteiler 83, wie in Fig. 1a, ist in der Ausführung nach Fig. 1c nicht notwendig, da die Einkoppelung des Messlaserstrahls und die Auskoppelung des Arbeitslaserstrahls in einem Winkel zueinander erfolgen,

Die Fig. 2a zeigt eine weitere Abwandlung der Laseranordnung nach Fig. 1a, wobei das Phasenfrontstellglied 30 senkrecht beaufschlagt wird. Dadurch findet eine genauere optische Abbildung zwischen der Phasenstörungsebene d, der Korrekturebene c und der Messebene m statt. Dies führt zu einer geringeren Regelabweichung. Ein Polarisationsstrahlteiler 60 und eine Viertelwellenverzögerungsoptik 61 haben die Funktion, Arbeits- und Messlaserstrahl nach einer Beaufschlagung des Phasenfrontstellglieds 30 in Richtung auf den zweiten Resonatorspiegel 22 abzulenken. Während der Messlaserstrahl vom zweiten Resonatorspiegel 22 ausgekoppelt wird, wird der Arbeitslaserstrahl vom zweiten Resonatorspiegel 22 erneut über den Polarisationsstrahlteiler 60 und die Viertelwellenverzögerungsoptik 61 auf das Phasenfrontstellglied 30 gelenkt und von diesem reflektiert. Nach einem erneuten Durchgang durch die Viertelwellenverzögerungsoptik 61 hat der Arbeitslaserstrahl die entsprechende Polarisation, so dass er den Polarisationsstrahlteiler 60 wieder in Richtung Lasermedium 10 durchläuft. Nach dem Durchgang durch das Lasermedium 10 wird er vom teildurchlässigen Resonatorspiegel 21 ausgekoppelt. Ein für die Ausführung nach Fig. 1a notwendiges Teleskop 32 erübrigt sich.

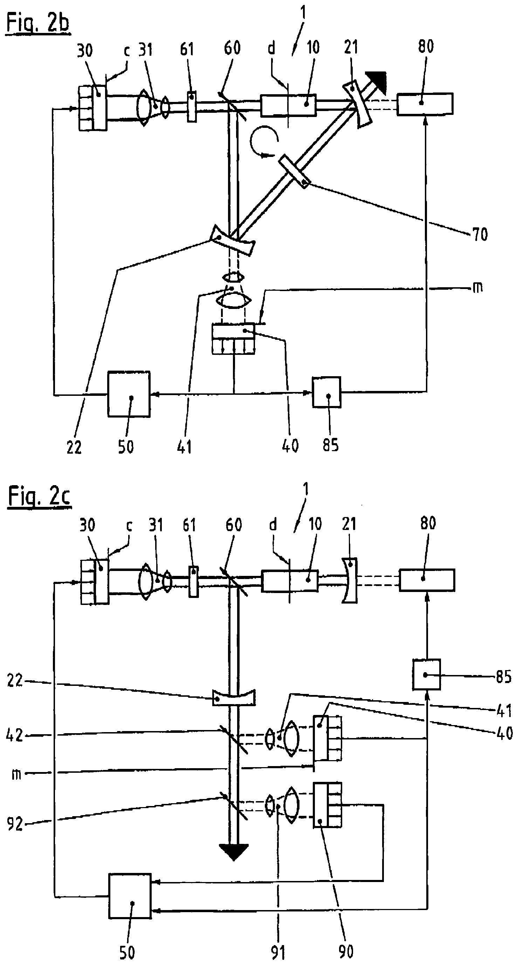

Die Fig. 2b zeigt eine Abwandlung der Laseranordnung nach Fig, 2a. In Fig. 2b ist ähnlich wie in Fig. 1c der Resonator als Ringresonator ausgebildet. Es findet wiederum ein Einfachdurchgang des Arbeitslaserstrahls statt. Eine Halbwellenverzögerungsoptik 70 hat die Funktion, aufgrund der bereits zweifach durchlaufenen Viertelwellenverzögerungsoptik 61 eine gesamte Phasenverschiebung von genau einer Wellenlänge zu erhalten. Die Halbwellenverzögerungsoptik 70 gleicht die Phasenverschiebungen der Viertelwellenverzögerungsoptik 61 somit aus.

Die Fig. 2c zeigt eine Abwandlung der Laseranordnung nach Fig. 2a. Bei dieser Abwandlung ist eine verfeinerte Regelung vorgesehen. Hierzu weist die Laseranordnung 1 einen zweiten Phasenfrontsensor 90 auf, der mit einem Teilstrahl des Arbeitslaserstrahls beaufschlagbar ist. Dadurch können die vom zweiten Phasenfrontsensor 90 erhaltenen Sensordaten zusätzlich von dem Phasenfrontregler 50 verarbeitet werden. Der Teilstrahl des Arbeitslaserstrahls wird mit Hilfe eines wellenselektiven Strahlteilers 92 über ein Teleskop 91 auf den Phasenfrontsensor 90 geleitet. Die Auskoppelung des Messlaserstrahls erfolgt mit einem wellenselektiven Strahlteiler 42.

Aufgrund der Ausbildung der Laseranordnung 1 mit einem Messlaserstrahl und der Reihenfolge der Anordnung der optischen Elementen, derart, dass der Strahlengangabschnitt des Messlaserstrahls beginnend mit dem Phasenfrontstellglied 30 bis zum Phasenfrontsensor 40 optisch konstant und unveränderlich bleibt, wird vor einer Inbetriebnahme der Laseranordnung 1 in einer einfacher Weise eine Generierung von Daten für den Phasenfrontregler 50 vorgenommen.

Ein beispielhafter Betrieb der Laseranordnung 1 jeder der dargestellten Ausführungen ist wie folgt:
- Inbetriebnahme der Messlaservorrichtung 80 und ständiger Betrieb der Messlaservorrichtung 80.
- Ständiger Betrieb der Phasenfrontregelung.
- Ständige Nachregelung der Leistung des Messlaserstrahls für einen optimalen Dynamikbereich des Phasenfrontsensors 40.
- Pulsartige Erzeugung des Arbeitslaserstrahls.
- Regelung der Phasenfront sowohl während einer Erzeugung eines Pulses eines Arbeitslaserstrahls als auch in Pausen des Lasermediums 10.

### Bezugszeichenliste

1 Laseranordnung
10 Lasermedium
15 Strahltransformator
15a Diagramm, zeigend ein Rechteck-Intensitätsprofil
15b Diagramm, zeigend ein Gaußsches Intensitätsprofil
21 Resonatorspiegel, benachbart zum Lasermedium
22 Resonatorspiegel, benachbart zum Phasenfrontstellglied
30 Phasenfrontstellglied
31 Teleskop
32 Teleskop
40 Phasenfrontsensor
41 Teleskop
42 Strahlteiler
50 Phasenfrontregler
60 Polarisationsstrahlteiler
61 Viertelwellenverzögerungsoptik
70 Halbwellenverzögerungsoptik
80 Messlaservorrichtung
83 Strahlteiler
85 Leistungsregler
90 Phasenfrontsensor
91 Teleskop
92 Strahlteiler
d Phasenstörungsebene
c Korrekturebene
m Messebene

## Patentansprüche

1. Laseranordnung (1) mit einer Phasenfrontregelung, derart, dass die Laseranordnung (1) folgende Elemente umfasst:
a) einen Resonator mit einem Strahlengang, ein innerhalb des Resonators angeordnetes Lasermedium (10) zur Erzeugung eines Arbeitslaserstrahls und ein innerhalb des Resonators angeordnetes Phasenfrontstellglied (30),
b) ein Einkoppelelement, das so ausgebildet ist, dass ein Messlaserstrahl einer Messlaservorrichtung (80) in den Strahlengang des Resonators eingekoppelt wird,
c) ein Auskoppelelement, das so ausgebildet ist, dass der Messlaserstrahl aus dem Resonator ausgekoppelt wird,
d) einen Phasenfrontregler (50) und einen Phasenfrontsensor (40), ferner, dass die Laseranordnung (1) so ausgebildet ist,
e) dass mit dem Messlaserstrahl zuerst das Einkoppelelement, dann das Lasermedium (10), dann das Phasenfrontstellglied (30), dann das Auskoppelelement und dann der Phasenfrontsensor (40) beaufschlagt werden,
f) dass durch das Lasermediums (10) verursachte thermische und thermomechanische Phasenfrontstörungen auf eine Phasenfront des Messlaserstrahls übertragen werden,
g) dass vom Phasenfrontstellglied (30) die Störung des Messlaserstrahls und damit des Arbeitslaserstrahls korrigiert wird,
h) dass vom Phasenfrontsensor (40) Sensordaten erhalten werden, die vom Phasenfrontregler (50) verarbeitet werden,
i) dass von dem Phasenfrontregler (50) Stellgliedsignale für das Phasenfrontstellglied (30) erzeugt werden,
**dadurch gekennzeichnet,**
**dass** mit dem Messlaserstrahl genau einmal zuerst das Einkoppelelement, dann das Lasermedium (10), dann das Phasenfrontstellglied (30), dann das Auskoppelelement und dann der Phasenfrontsensor (40) beaufschlagt wird.

2. Laseranordnung (1) nach Anspruch 1, **dadurch gekennzeichnet, dass** der Arbeitslaserstrahl eine Frequenz aufweist, die von einer Frequenz des Messlaserstrahls unterschiedlich ist und das Einkoppelelement und/oder das Auskoppelelement wellenselektiv ausgebildet ist.

3. Laseranordnung (1) nach Anspruch 1 oder 2, **dadurch gekennzeichnet, dass** der Resonator einen ersten, benachbart zum Lasermedium (10) angeordneten Resonatorspiegel (21) und einen zweiten, benachbart zum Phasenfrontsensor (40) angeordneten Resonatorspiegel (22) aufweist, derart, dass der erste Resonatorspiegel (21) als Einkoppelelement und/oder der zweite Resonatorspiegel (22) als Auskoppelelement ausgebildet ist.

4. Laseranordnung (1) nach einem der Ansprüche 1 bis 3, **dadurch gekennzeichnet, dass** vom Phasenfrontsensor (40) Sensordaten erhalten werden, die zusätzlich von einem Leistungsregler (85) der Messlaservorrichtung (80) verarbeitet werden.

5. Laseranordnung (1) nach einem der Ansprüche 1 bis 4, **dadurch gekennzeichnet, dass** die Laseranordnung (1) einen zweiten Phasenfrontsensor (90) aufweist, der mit einem Teilstrahl des Arbeitslaserstrahls beaufschlagt wird, derart, dass vom zweiten Phasenfrontsensor (90) erhaltbare Sensordaten zusätzlich von dem Phasenfrontregler (50) verarbeitet werden.

6. Laseranordnung (1) nach einem der Ansprüche 1 bis 5, **dadurch gekennzeichnet, dass** der Messlaserstrahl und der Arbeitslaserstrahl nicht nur hinsichtlich einer Phasenfrontform, sondern auch hinsichtlich eines Intensitätsprofils übereinstimmen.

7. Laseranordnung (1) nach einem der Ansprüche 1 bis 6, **dadurch gekennzeichnet, dass** das Phasenfrontstellglied (30) eine Korrekturebene (c) und das Lasermedium (10) eine festgelegte Phasenstörungsebene (d) aufweisen und bei der vor dem Phasenfrontstellglied (30) ein Teleskop (31) zur Strahlanpassung angeordnet ist, mit dem die Phasenstörungsebene (d) auf die Korrekturebene (c) optisch abgebildet wird.

8. Laseranordnung (1) nach einem der Ansprüche 1 bis 7, **dadurch gekennzeichnet, dass** der Phasenfrontsensor (40) eine Messebene (m) und das Phasenfrontstellglied (30) eine Korrekturebene (c) aufweisen und dass vor dem Phasenfrontsensor (40) ein Teleskop (41) zur Strahlanpassung angeordnet ist, mit dem die Korrekturebene (c) auf die Messebene (m) optisch abgebildet wird.

9. Laseranordnung (1) nach einem der Ansprüche 1 bis 8, **dadurch gekennzeichnet, dass** im Resonator ein Strahltransformator (15) angeordnet ist, derart, dass in Richtung Auskoppelung des Arbeitslaserstrahls ein Gaußsches Intensitätsprofil und in Richtung Lasermedium (10) und Phasenfrontstellglied (30) ein Rechteck-Intensitätsprofil generiert wird.

## Claims

1. Laser device (1) with wavefront control, wherein the laser device (1) includes the following elements:
a) a resonator with an optical path, a laser medium located within the resonator for generation of a working laser beam, and a wavefront regulating unit (30) located within the resonator,
b) a coupling element, designed in such a way that a probe laser beam of a probe laser device (80) can be coupled into the optical path of the resonator,
c) a decoupling element, designed in such a way that the probe laser beam can be decoupled from the resonator,
d) a wavefront controller (50) and a wavefront sensor (40), wherein the laser device (1) is designed in such a way
e) that the probe laser beam impacts first the coupling element, then the laser medium (10), then the wavefront regulating unit (30), then the decoupling element, and then the wavefront sensor (40),
f) that the thermal and thermo-mechanical disturbances of the phase front, generated within the laser medium (10), are transferred to a wavefront of the probe laser beam,
g) that the disturbance of the probe laser beam, and thereby that of the working laser beam, can be corrected by the wavefront regulating unit (30),
h) that sensor data can be received from the wavefront sensor (40) and can be processed by the wavefront controller (50),
i) that control signals for the wavefront regulating unit (30) can be generated by the wavefront controller (50),
**and wherein the laser device is characterized in**
**that** the probe laser beam impacts first the coupling element, then the laser medium (10), then the wavefront regulating unit (30), then the decoupling element, and then the wavefront sensor (40).

2. Laser device (1) according to claim 1, wherein the working laser beam exhibits a wavelength which is different from the wavelength of the probe laser beam and wherein the coupling element and/or the decoupling element are constructed in a wavelength-selective manner.

3. Laser device (1) according to claim 1 or 2, wherein the resonator comprises a first resonator mirror (21), located adjacent to the laser medium (10), and a second resonator mirror (22), located adjacent to the wavefront sensor (40), in such a way that the first resonator mirror (21) is designed as a coupling element and/or the second resonator mirror is designed as a decoupling element.

4. Laser device (1) according to any of the claims 1 to 3, wherein sensor data can be received from the wavefront sensor (40) and can additionally be processed by a power controller (85) of the probe laser device (80).

5. Laser device (1) according to any of the claims 1 to 4, wherein a second wavefront sensor (90) is provided, which is impacted with a partial beam of the working laser beam, in such a way that sensor data, received from the second wavefront sensor, can additionally be processed by the wavefront controller (50).

6. Laser device (1) according to any of the claims 1 to 5, wherein the probe laser beam and the working laser beam have not only the same wavefront form, but also the same intensity profile.

7. Laser device (1) according to any of the claims 1 to 6, wherein the wavefront regulating unit (30) comprises a correction plane (c) and the laser medium (10) comprises a fixed phase disturbance plane (d), and wherein a telescope (31) is located in front of the wavefront regulating unit (30) for beam adjustment, by means of which the phase disturbance plane (d) is optically conjugated to the correction plane (c).

8. Laser device (1) according to any of the claims 1 to 7, wherein the wavefront sensor (40) comprises a measuring plane (m) and the wavefront regulating unit (30) comprises a correction plane (c), and wherein a telescope (41) is located in front of the phase front sensor (40) for beam adjustment, by means of which the correction plane (c) can be optically conjugated to the measuring plane (m).

9. Laser device (1) according to any of the claims 1 to 8, wherein a beam profile converter (15) is located within the resonator, in such a way that it is possible to generate a Gaussian intensity profile in the direction of the outcoupling of the working laser beam and a rectangular intensity profile in the direction of the laser medium (10) and the wavefront regulation unit (30).

## Revendications

1. Dispositif laser (1) doté d'une correction du front d'onde et comprenant les composants suivants :
a) une cavité laser avec un trajet de faisceau, un milieu amplificateur (10) à l'intérieur de la cavité pour générer un faisceau laser de travail, ainsi qu'un composant de correction du front d'onde (30) à l'intérieur de la cavité,
b) un élément de couplage permettant de coupler un faisceau laser de sonde d'un dispositif laser de sonde (80) sur le trajet du faisceau de la cavité laser,
c) un élément de découplage permettant de découpler le faisceau laser de sonde de la cavité laser,
d) un régulateur de front d'onde (50) et un analyseur de front d'onde (40), sachant que le dispositif laser (1) est agencé de telle manière que
e) le faisceau laser de sonde impacte d'abord l'élément de couplage, puis le milieu amplificateur (10), puis le composant de correction du front d'onde (30), puis l'élément de découplage et ensuite l'analyseur de front d'onde (40) et que
f) les perturbations thermiques et thermomécaniques induites par le milieu amplificateur (10) s'appliquent au front d'onde du faisceau laser de sonde et que
g) la perturbation du faisceau laser de sonde, et ainsi du faisceau laser de travail, est corrigée par le composant de correction du front d'onde (30) et que
h) les données mesurées par l'analyseur de front d'onde (40) sont traitées par le régulateur de front d'onde (50) et que
i) le régulateur de front d'onde (50) émet des signaux de contrôle destinés au composant de correction du front d'onde (30),
**ce dispositif laser (1) étant caractérisé en ce que**
le faisceau laser de sonde impacte d'abord l'élément de couplage, puis le milieu amplificateur (10), puis le composant de correction du front d'onde (30), puis l'élément de découplage et ensuite l'analyseur de front d'onde (40).

2. Dispositif laser (1) selon la revendication 1, **caractérisé en ce que** le faisceau laser de travail présente une longueur d'onde différente de la longueur d'onde du faisceau laser de sonde et **en ce que** l'élément de couplage et/ou l'élément de découplage sont sélectifs en longueur d'onde.

3. Dispositif laser (1) selon l'une quelconque des revendications 1 ou 2, **caractérisé en ce que** la cavité laser présente un premier miroir (21) adjacent au milieu laser (10) et un deuxième miroir (22) adjacent à l'analyseur de front d'onde (40) et **en ce que** le premier miroir (21) est conçu pour servir comme élément de couplage et/ou que le deuxième miroir (22) est conçu pour servir comme élément de découplage.

4. Dispositif laser (1) selon l'une quelconque des revendications 1 à 3, **caractérisé en ce que** les données mesurées par l'analyseur de front d'onde (40) peuvent être traitées de façon additionnelle par un régulateur de puissance (85) du dispositif laser de sonde (80).

5. Dispositif laser (1) selon l'une quelconque des revendications 1 à 4, **caractérisé en ce que** ce dispositif laser (1) présente un deuxième analyseur de front d'onde (90) impacté par une fraction du faisceau laser de travail et **en ce que** les données mesurées par ce deuxième analyseur de front d'onde (90) sont traitées de façon additionnelle par le régulateur de front d'onde (50).

6. Dispositif laser (1) selon l'une quelconque des revendications 1 à 5, **caractérisé en ce que** le faisceau laser de sonde et le faisceau laser de travail ne présentent pas seulement un profil de phase identique, mais également un profil d'intensité identique.

7. Dispositif laser (1) selon l'une quelconque des revendications 1 à 6, **caractérisé en ce que** le composant de correction du front d'onde (30) présente un plan de correction (c) et que le milieu amplificateur (10) présente un plan fixe de perturbation de phase (d) et **en ce qu'**un télescope (31) d'adaptation de faisceau est agencé devant le composant de correction du front d'onde (30), ce télescope (31) faisant en sorte que le plan de perturbation de phase (d) est optiquement conjugué au plan de correction (c).

8. Dispositif laser (1) selon l'une des revendications 1 à 7, **caractérisé en ce que** l'analyseur de front d'onde (40) présente un plan de mesure (m) et que le composant de correction du front d'onde (30) présente un plan de correction (c) et **en ce qu'**un télescope (41) d'adaptation de faisceau est agencé devant l'analyseur de front d'onde (40), ce télescope (41) faisant en sorte que le plan de correction (c) est optiquement conjugué au plan de mesure (m).

9. Dispositif laser (1) selon l'une des revendications 1 à 8, **caractérisé en ce qu'**un convertisseur de faisceau (15) est agencé dans la cavité laser de façon à ce qu'un profil gaussien d'intensité est généré dans la direction du découplage du faisceau laser de travail et qu'un profil rectangulaire d'intensité est généré dans la direction du milieu amplificateur (10) et du composant de correction du front d'onde (30).
